# EUROPEAN PATENT SPECIFICATION

(11) **EP 3 337 042 B1**
(45) Date of publication and mention of the grant of the patent: **25.11.2020**
(21) Application number: 16204075.2
(22) Date of filing: 14.12.2016
(51) Int. Cl.: H04B 1/00

(54) **CELLULAR HANDSET DEVICE**
ZELLULARE HANDAPPARATVORRICHTUNG
DISPOSITIF DE COMBINÉ CELLULAIRE

(43) Date of publication of application: 20.06.2018
(73) Proprietor: Intel IP Corporation, Santa Clara, CA 95054 (US)
(72) Inventor: ZUKERMAN, Gil, 45300 Hod-HaSharon (IL); ROTSTEIN, Ron, 6291076 Tel Aviv (IL); SCHOENAUER, Tim, 85622 Feldkirchen (DE)
(74) Representative: Viering, Jentschura & Partner mbB Patent- und Rechtsanwälte

(56) References cited:
- EP-A1- 2 375 803
- US-A- 5 940 438
- US-A1- 2007 263 754
- US-A1- 2010 277 252
- US-A1- 2011 148 699

## Description

### FIELD

The disclosure relates to a cellular handset device with a configurable hardware circuit for processing a radio signal according to a first hardware capability set, in particular for a global navigation satellite system (GNSS) service, in a first operation mode and for processing a radio signal according to a second hardware capability set, in particular for a metropolitan beacon system (MBS) service, in a second operation mode. The disclosure particularly relates to techniques for reusing modem capabilities for MBS services.

### BACKGROUND

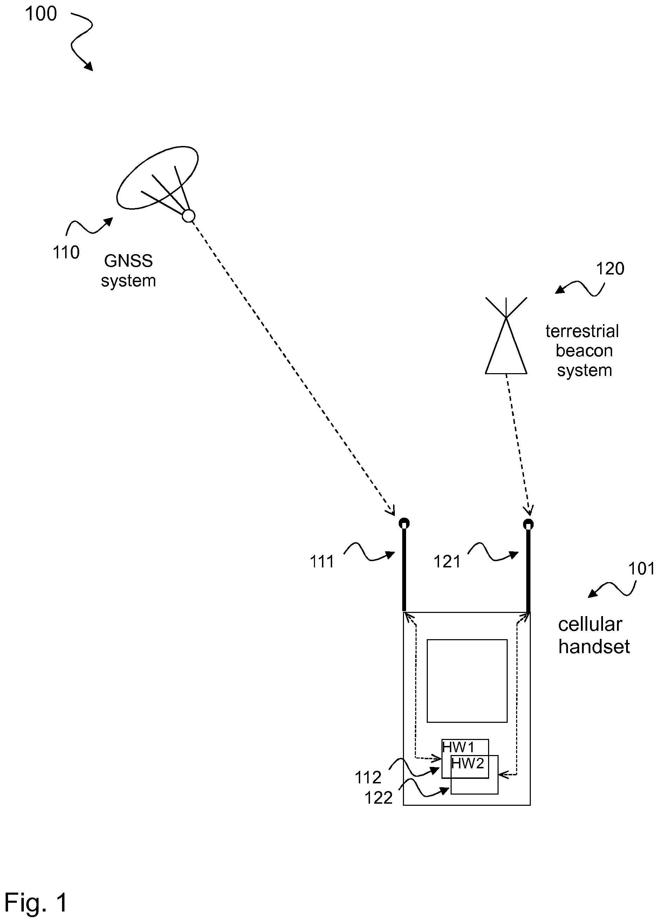

Cellular handsets 101 today are typically equipped with GNSS functionality 110, which however is not coping well with indoor scenarios. Terrestrial beacon systems 120 offer a far better performance for indoor positioning, but induce a cost adder. When reusing cellular front-end structures 111, 112 to receive terrestrial beacon systems 120, cellular functionality needs to be given up. Alternatively, costly additional front-end structures 121, 122 for using terrestrial beacon systems 120 must be provided as shown in Fig. 1. Existing network protocols assume that the user equipment (UE) has a certain set of capabilities, and needs to follow network configuration command. Once UE communicated its capabilities and the network configuration command has been communicated to the UE 101, the UE must comply for the duration of the current network registration. As consequences, there is no flexibility in the system to reapply for new set of capabilities assuming those capabilities are dynamically changed. It is most desirable for rare cases such as e911 call to use terrestrial beaconing system.

Document US 2010/277252 A1 discloses a multi-mode radio frequency front end module. Document EP 2 375 803 A1 discloses a multi-mode radio access network controller entity with dynamic re-configuration for supporting at least two different radio access technologies. Document US 2015/0133171 A1 discloses a method and system for implementing a dual-mode dual-band GNSS/M-LMS pseudolites receiver.

Hence, there is a need to improve the cellular handset with respect to efficiently use terrestrial beaconing system, in particular for e911 emergency call.

### BRIEF DESCRIPTION OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description.
Fig. 1 is a schematic diagram illustrating a communication system 100 with a cellular handset 101 having GNSS functionality and terrestrial beacon system functionality.
Fig. 2 is a schematic diagram illustrating a communication system 200 with a cellular handset device 201 according to the disclosure.
Fig. 3 is a block diagram of a cellular handset device 201 according to the disclosure.
Fig. 4 is a message diagram of a method using UE initiated capability change in a cellular handset device according to the disclosure.
Fig. 5 is a schematic diagram illustrating a method 500 for operating a cellular handset device according to the disclosure.

### DETAILED DESCRIPTION

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the present invention. The following detailed description, therefore, is not to be taken in a limiting sense, and the scope of the present invention is defined by the appended claims.

The following terms, abbreviations and notations will be used herein:
- GNSS:: global navigation satellite system
- MBS:: Metropolitan Beacon System
- UE:: User Equipment, cellular handset
- E911:: emergency service in US
- HW:: Hardware, hardware circuit
- RX:: Receive
- NW:: network
- LTE:: Long Term Evolution

The systems, methods and devices described herein may be based on using global navigation satellite system (GNSS) capability set or Metropolitan Beacon System (MBS) capability set. A GNSS capability set is a set of hardware functions that supports the global navigation satellite system, i.e. a satellite navigation system with global coverage. A satellite navigation system is a system that uses satellites to provide autonomous geo-spatial positioning. It allows small electronic receivers to determine their location to high precision (within a few meters) using time signals transmitted along a line of sight by radio from satellites. An MBS capability set is a set of hardware functions that supports navigation by the MBS system. Metropolitan Beacon System (MBS) is a precise three dimensional location and timing technology designed to provide services to entire metropolitan areas where GNSS or other satellite location signals are blocked or can't be reliably received.

The devices and methods described in the following may use hardware that supports the NextNav network. The NextNav network uses Metropolitan Beacon System technology to deliver high precision three-dimensional indoor location capabilities across a market area. MBS is built on principles similar to GPS transmitting precisely timed signals from a network of wide-area beacons enabling receivers to use trilateration techniques to determine their precise location. This differs significantly from other approaches to indoor and urban location relying on short-range, local-area transmitters. MBS is built on principles similar to GPS, transmitting precisely timed signals from a network of wide-area beacons enabling receivers to use trilateration techniques to determine their precise location. In the United States, NextNav operates its MBS network over its spectrum licenses in the 920-928 MHz band.

The devices and methods described in the following may use the E911 service. Enhanced 911 or E911 is a system used in North America that links emergency callers with the appropriate public resources. In North America, the system tries to automatically associate a location with the origin of the call. This location may be a physical address or other geographic reference information such as X/Y map coordinates. The caller's telephone number is used in numerous manners to track a location that can be used to dispatch police, fire, emergency medical and other response resources. Note that E911 exists not only in the US, there are a variety of E911 systems in Europe as well and it is a part of the 3GPP standard in some of its variation. There are multiple E911 methodologies, the special requirements in the US is that the FCC is mandating E911 with location indoor (MBS or similar) and outdoors as well.

It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The techniques described herein may be implemented in wireless communication networks, in particular communication networks based on high speed communication standards from the 802.11 family according to the WiFi alliance, e.g. 802.11ad and successor standards. The methods are also applicable for mobile communication standards such as LTE, in particular LTE-A and/or OFDM and successor standards such as 5G. The methods and devices described below may be implemented in electronic devices such as cellular handsets, mobile or wireless devices (or mobile stations or User Equipments (UE)). The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

In the following, embodiments are described with reference to the drawings, wherein like reference numerals are generally utilized to refer to like elements throughout. In the following description, for purposes of explanation, numerous specific details are set forth in order to provide a thorough understanding of one or more aspects of embodiments. However, it may be evident to a person skilled in the art that one or more aspects of the embodiments may be practiced with a lesser degree of these specific details. The following description is therefore not to be taken in a limiting sense.

The various aspects summarized may be embodied in various forms. The following description shows by way of illustration various combinations and configurations in which the aspects may be practiced. It is understood that the described aspects and/or embodiments are merely examples, and that other aspects and/or embodiments may be utilized and structural and functional modifications may be made without departing from the scope of the present disclosure.

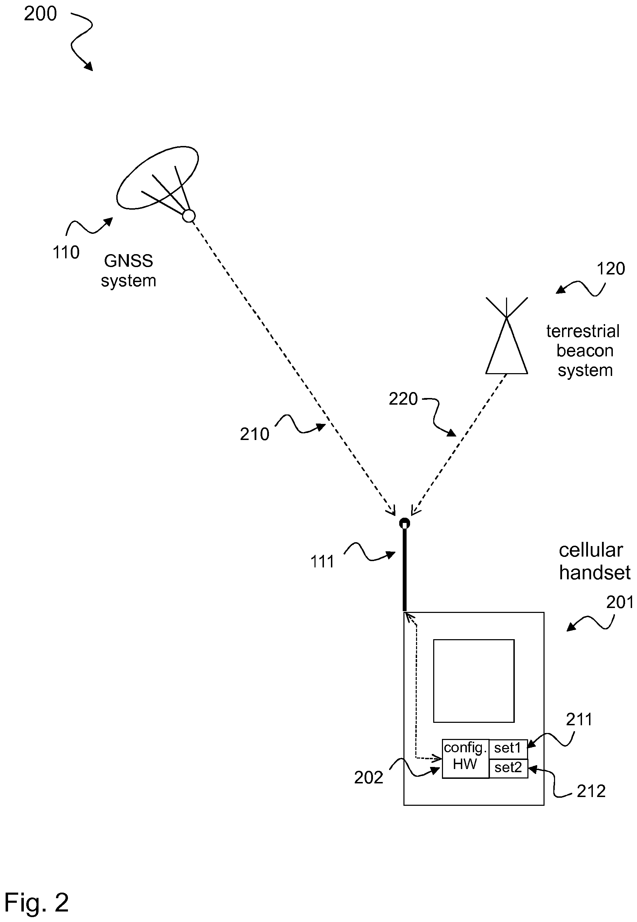

Fig. 2 is a schematic diagram illustrating a communication system 200 with a cellular handset device 201 according to the disclosure.

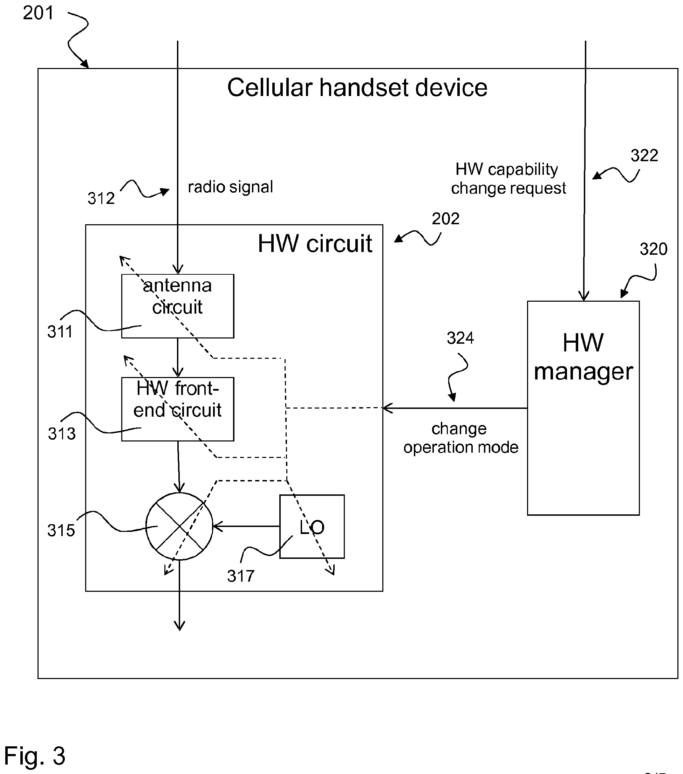

The cellular handset device 201 includes a configurable hardware circuit 202 and a hardware manager 320 (described in detail below with respect to Fig. 3). The hardware circuit 202 is configured to process a radio signal 210, 220 according to a first hardware capability set 211 when configured for a first operation mode and according to a second hardware capability set 212 when configured for a second operation mode. The radio signal may be a satellite signal 210 received from a satellite of a GNSS system 110 or alternatively a terrestrial radio signal 220 received from a terrestrial beacon system 120 such as an MBS system. The hardware manager is configured to change an operation mode of the hardware circuit 202 between the first operation mode and the second operation mode responsive to a hardware capability change request. This hardware capability change request may be initiated from a cellular network or initiated by a higher application layer of the cellular handset device 201.

Hence, Figure 2 illustrates a communication system 200 for changing cellular handset (UE) capability on-the-fly in order to enable terrestrial beacon system features. Note that the GNSS system 110 and the MBS system 120 are only exemplary services to illustrate the reconfiguration of the hardware circuit 202. Any other service where different hardware capability sets are required can be implemented by such a mobile device 201 as well.

The basic principle is to reuse existing receiver resources that share similar characteristics, e.g. terrestrial beaconing system 120 for indoor positioning (such as NextNAV) operating at 915 MHz bandwidth LTE band 8 operating at 920-925MHz. In self organized networks, the UE will re-configure itself and may be required to notify the network. However, in the non-self-organized networks, the device needs to apply for reconfiguration via capabilities change request from the cellular network. The cellular network will accept or reject it according to its network policy. The UE capability request may be initiated by the network (e.g. after e911 services activated). The network in most cases will acknowledge to such request assuming it is designed for it. The UE will reuse the existing infrastructure after confirmation from network arrives as long as it requires by the capability (e.g. till the e911 service being served) and reconfigure back to its default capabilities. This may also require to be notified that the device capabilities were restored.

The cellular handset device 201 described herein supports UE capability reconfiguration, i.e. an RX chain (e.g. as described below with respect to Fig. 3) can be reused without duplicating or extending it with another external integrated circuit (IC) 122 as shown in Figure 1. This functionality is mostly appealing in devices that are designed to be used world-wide where a subset of the feature set or partial regulatory requirements apply only to specific regions (e.g. e911 services which are mandatory only in North America). The UE will be able to "hijack" certain circuit to be served temporarily and to restore to its original purposes after the service has been served.

Fig. 3 is a block diagram of a cellular handset device 201 according to the disclosure.

The cellular handset device 201 includes a configurable hardware circuit 202 and a hardware manager 320. The hardware circuit 202 is configured to process a radio signal 312, e.g. a satellite signal 210 of a GNSS system 110 as described above with respect to Fig. 2 or a terrestrial radio signal 220 of a terrestrial beacon system 120 as described above with respect to Fig. 2, according to a first hardware capability set when configured for a first operation mode and according to a second hardware capability set when configured for a second operation mode. The hardware manager 320 is configured to change an operation mode 324 of the hardware circuit 202 between the first operation mode and the second operation mode responsive to a hardware capability change request 322. This hardware capability change request 322 may be initiated from a cellular network or initiated by a higher application layer of the cellular handset device 201.

The hardware circuit 202 includes a reception chain including an antenna circuit 311, a hardware front-end circuit 313, at least one mixer 315 and at least one local oscillator 317 which are configured to support the first hardware capability set when the hardware circuit 202 is configured for the first operation mode and which are configured to support the second hardware capability set when the hardware circuit 202 is configured for the second operation mode.

The hardware front-end circuit 313 may operate at a first frequency band when the hardware circuit 202 is configured for the first operation mode and may operate at a second frequency band when the hardware circuit 202 is configured for the second operation mode.

The at least one local oscillator 317 may operate at a first clock frequency when the hardware circuit 202 is configured for the first operation mode and may operate at a second clock frequency when the hardware circuit 202 is configured for the second operation mode.

The hardware front-end circuit 313 may receive a satellite signal 210 when the hardware circuit 202 is configured for the first operation mode and may receive a terrestrial beacon signal 220 when the hardware circuit 202 is configured for the second operation mode.

The hardware circuit 202 may include a navigation circuit (not shown in Fig. 3) that may process the satellite signal 210 based on a global navigation satellite system functionality when the hardware circuit 202 is configured for the first operation mode and that may process the terrestrial beacon signal 220 based on a terrestrial beacon system functionality when the hardware circuit 202 is configured for the second operation mode.

The terrestrial beacon system functionality may include an in-door call locating functionality, e.g. an emergency call locating functionality such as an e911 service functionality.

The cellular handset device 201 may include a hardware capability storage for storing the first hardware capability set 211 when the hardware circuit 202 is configured for the second operation mode and for storing the second hardware capability set 212 when the hardware circuit 202 is configured for the first operation mode.

The hardware manager may retrieve a content of the hardware capability storage responsive to the hardware capability change request 322. I.e. when reconfiguring the hardware circuit 202 from the first hardware capability set 211 to the second hardware capability set 212, this second hardware capability set 212 may be retrieved from the storage. In contrast, when reconfiguring the hardware circuit 202 from the second hardware capability set 212 to the first hardware capability set 211, this first hardware capability set 211 may be retrieved from the storage.

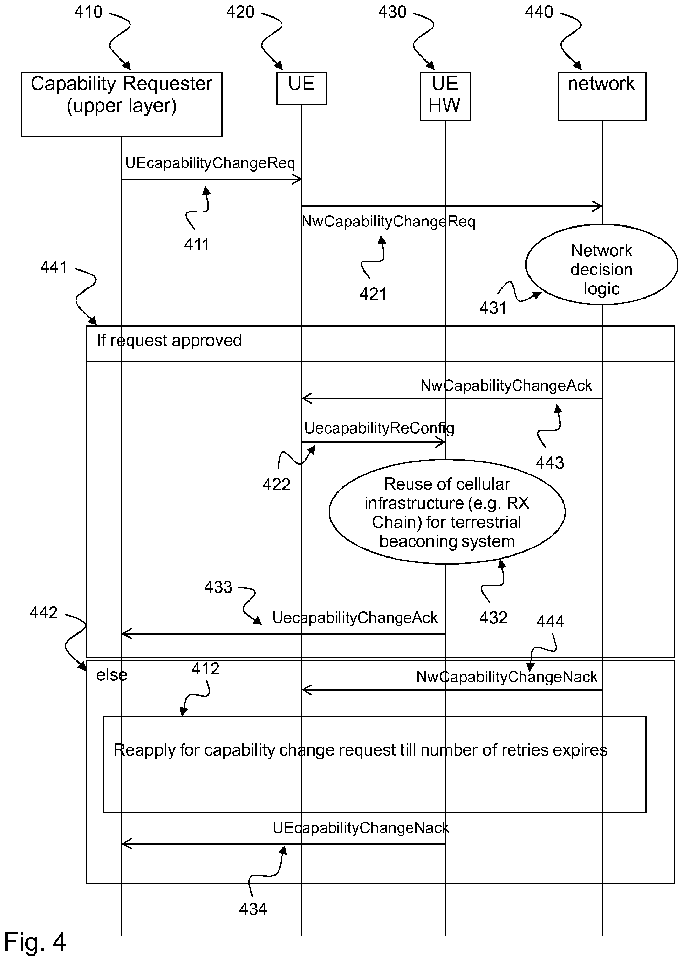

The hardware manager 320 may receive the hardware capability change request 322 from an upper layer circuit of the cellular handset device 201 or from a cellular network. The hardware manager 320 may forward the hardware capability change request 322 received from the upper layer circuit to the cellular network and change the operation mode of the hardware circuit 202 responsive to an acknowledgement to the hardware capability change request 322 from the cellular network, e.g. as described below with respect to Fig. 4.

The hardware circuit 202 may acknowledge a change of its operation mode to the upper layer circuit. The hardware manager 320 may reapply the forwarding of the hardware capability change request 322 to the cellular network upon receiving a Non-Acknowledgement to the hardware capability change request 322 from the cellular network until a stopping criterion expires. This stopping criterion may include a reception of a predetermined number of Non-Acknowledgements to the reapplied forwarding of the hardware capability change request, e.g. as described below with respect to Fig. 4.

The hardware circuit 202 may report the Non-Acknowledgement to the upper layer circuit responsive to the expiration of the stopping criterion, e.g. as described below with respect to Fig. 4.

Fig. 4 is a message diagram of a method using UE initiated capability change in a cellular handset device according to the disclosure, e.g. a cellular handset device 201 as described above with respect to Figures 2 and 3.

This method illustrates to reuse existing infrastructure in the modem to support regulatory requirements such as e911, which are valid in North America, or others by applying for capability change request. Two flows are presented: 1. Capability change initiated by UE flow; and 2. Capability change initiated by Network flow.

Upon request for UE capability change "UE_CAPABILITY_CHANGE_REQ" 411 by upper layer 410 (e.g. coming from host application), the UE 420 sends "NW_CAPABILITY_CHANGE_REQ" 421 to the cellular network 440. Upon NW_CAPABILITY_CHANGE_REQ 421 from UE 420 received, the cellular network 440 decides 431 if to allow this capability change. In case it accepts 441 this request 421 it will send "NW_CAPABILITY_CHANGE_ACK" 443 or in case it rejects 442 it will send "NW_CAPABILITY_CHANGE_NACK" 444. Upon reception of the "NW_CAPABILITY_CHANGE_ACK" 443 UE 420 will send "UE_CAPABILITY_RECONFIG" 422 to UE HW 430 to reconfigure its infrastructure 432 to support the capability (e.g. share RX Chain including LOs, mixers, antenna, frontend). The UE HW 430 will report back to upper layer 410 with "UE_CAPABILITY_CHANGE_ACK" 433. For example, it will change the LTE band 8 chain to receive terrestrial beaconing system for navigation on 915 MHz (NextNAV) Upon reception of "NW_CAPABILITY_CHANGE_NACK" 444 the UE 420 will wait for a predefined time before reapplying for CAPABILTY change request 412. Upon predefined number of retrials of capability change request with NACK response, the UE 420 will report back to the capability requester upper layer 410 with "UE_CAPABILITY_CHANGE_NACK" 434. When services are served, the flow can be repeated by restoring to previous capability.

The flow above can be altered to support also network initiated capability change. Instead of the UE 420 (or the UE upper layer 410) initiating the capability change request, the network 440 will send the "UE_CAPABILITY_CHANGE_REQ" 411 to the UE 420. The UE 420 shall comply with this request and change its capability to support services temporary. When finished, the UE 420 will initiate the first flow (Capability change initiated by UE flow) to restore default capabilities.

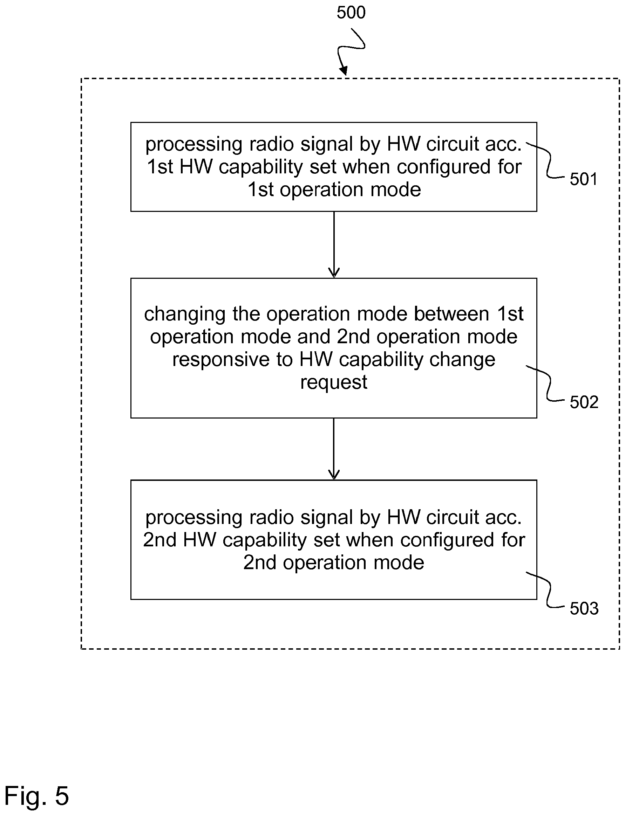

Fig. 5 is a schematic diagram illustrating a method 500 for operating a cellular handset device including a hardware circuit according to the disclosure. The method 500 may perform the functionality of the cellular handset device 201 described above with respect to Figures 2 and 3.

The method 500 includes: processing 501 a radio signal by the hardware circuit according to a first hardware capability set when an operation mode of the hardware circuit is configured for a first operation mode. The method 500 further includes: changing 502 the operation mode of the hardware circuit between the first operation mode and a second operation mode responsive to a hardware capability change request. The method 500 further includes: processing 503 a radio signal by the hardware circuit according to a second hardware capability set when the operation mode of the hardware circuit is configured for the second operation mode.

The hardware circuit may include a reception chain, wherein the reception chain comprises an antenna circuit, a hardware front-end circuit, at least one mixer and at least one local oscillator which are configured to support the first hardware capability set when the hardware circuit is configured for the first operation mode and which are configured to support the second hardware capability set when the hardware circuit is configured for the second operation mode.

The method 500 may further include: operating the hardware front-end circuit at a first frequency band when the hardware circuit is configured for the first operation mode; and operating the hardware front-end circuit at a second frequency band when the hardware circuit is configured for the second operation mode.

The method 500 may further include: operating the at least one local oscillator at a first clock frequency when the hardware circuit is configured for the first operation mode; and operating the at least one local oscillator at a second clock frequency when the hardware circuit is configured for the second operation mode.

The method 500 may further include: receiving a satellite signal, by the hardware front-end circuit, when the hardware circuit is configured for the first operation mode; and receiving a terrestrial beacon signal, by the hardware front-end circuit, when the hardware circuit is configured for the second operation mode.

The method 500 may further include: processing the satellite signal based on a global navigation satellite system functionality when the hardware circuit is configured for the first operation mode; and processing the terrestrial beacon signal based on a terrestrial beacon system functionality when the hardware circuit is configured for the second operation mode.

The terrestrial beacon system functionality may include an in-door call locating functionality. The terrestrial beacon system functionality may include an emergency call locating functionality. The emergency call locating functionality may include an e911 service functionality.

The method 500 may further include: storing the first hardware capability set in a hardware capability storage when the hardware circuit is configured for the second operation mode; and storing the second hardware capability set in the hardware capability storage when the hardware circuit is configured for the first operation mode.

The method 500 may further include retrieving a content of the hardware capability storage responsive to the hardware capability change request. The method 500 may further include receiving the hardware capability change request from an upper layer circuit of the cellular handset device or from a cellular network.

The method 500 may further include: forwarding the hardware capability change request received from the upper layer circuit to the cellular network; and changing the operation mode of the hardware circuit responsive to an acknowledgement to the hardware capability change request from the cellular network.

The method 500 may further include acknowledging a change of the operation mode of the hardware circuit to the upper layer circuit. The method 500 may further include reapplying the forwarding of the hardware capability change request to the cellular network upon receiving a Non-Acknowledgement to the hardware capability change request from the cellular network until a stopping criterion expires. The stopping criterion may include a reception of a predetermined number of Non-Acknowledgements to the reapplied forwarding of the hardware capability change request. The method 500 may include reporting the Non-Acknowledgement to the upper layer circuit responsive to the expiration of the stopping criterion.

The devices and systems described in this disclosure may be implemented as Digital Signal Processors (DSP), microcontrollers or any other side-processor or hardware circuit on a chip or an application specific integrated circuit (ASIC).

Embodiments described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the methods described above with respect to Figs. 4 and 5 and the computing blocks described above with respect to Figures 2 and 3. Such a computer program product may include a non-transient readable storage medium storing program code thereon for use by a processor, the program code comprising instructions for performing the methods or the computing blocks as described above.

### EXAMPLES

The following examples pertain to further embodiments.
Example 1 is a cellular handset device, comprising: a hardware circuit configured to process a radio signal according to a first hardware capability set when configured for a first operation mode and to process a radio signal according to a second hardware capability set when configured for a second operation mode; and a hardware manager configured to change an operation mode of the hardware circuit between the first operation mode and the second operation mode responsive to a hardware capability change request.
In Example 2, the subject matter of Example 1 can optionally include that the hardware circuit comprises a reception chain, that the reception chain comprises an antenna circuit, a hardware front-end circuit, at least one mixer and at least one local oscillator which are configured to support the first hardware capability set when the hardware circuit is configured for the first operation mode and which are configured to support the second hardware capability set when the hardware circuit is configured for the second operation mode.
In Example 3, the subject matter of Example 2 can optionally include that the hardware front-end circuit is configured to operate at a first frequency band when the hardware circuit is configured for the first operation mode and to operate at a second frequency band when the hardware circuit is configured for the second operation mode.
In Example 4, the subject matter of any one of Examples 2-3 can optionally include that the at least one local oscillator is configured to operate at a first clock frequency when the hardware circuit is configured for the first operation mode and to operate at a second clock frequency when the hardware circuit is configured for the second operation mode.
In Example 5, the subject matter of any one of Examples 2-4 can optionally include that the hardware front-end circuit is configured to receive a satellite signal when the hardware circuit is configured for the first operation mode and to receive a terrestrial beacon signal when the hardware circuit is configured for the second operation mode.
In Example 6, the subject matter of Example 5 can optionally include that the hardware circuit comprises a navigation circuit configured to process the satellite signal based on a global navigation satellite system functionality when the hardware circuit is configured for the first operation mode and to process the terrestrial beacon signal based on a terrestrial beacon system functionality when the hardware circuit is configured for the second operation mode.
In Example 7, the subject matter of Example 6 can optionally include that the terrestrial beacon system functionality comprises an in-door call locating functionality.
In Example 8, the subject matter of any one of Examples 6-7 can optionally include that the terrestrial beacon system functionality comprises an emergency call locating functionality.
In Example 9, the subject matter of Example 8 can optionally include that the emergency call locating functionality comprises an e911 service functionality.
In Example 10, the subject matter of any one of Examples 1-9 can optionally include: a hardware capability storage configured to store the first hardware capability set when the hardware circuit is configured for the second operation mode and to store the second hardware capability set when the hardware circuit is configured for the first operation mode.
In Example 11, the subject matter of Example 10 can optionally include that the hardware manager is configured to retrieve a content of the hardware capability storage responsive to the hardware capability change request.
In Example 12, the subject matter of any one of Examples 1-11 can optionally include that the hardware manager is configured to receive the hardware capability change request from an upper layer circuit of the cellular handset device or from a cellular network.
In Example 13, the subject matter of Example 12 can optionally include that the hardware manager is configured to forward the hardware capability change request received from the upper layer circuit to the cellular network and to change the operation mode of the hardware circuit responsive to an acknowledgement to the hardware capability change request from the cellular network.
In Example 14, the subject matter of any one of Examples 12-13 can optionally include that the hardware circuit is configured to acknowledge a change of its operation mode to the upper layer circuit.
In Example 15, the subject matter of any one of Examples 13-14 can optionally include that the hardware manager is configured to reapply the forwarding of the hardware capability change request to the cellular network upon receiving a Non-Acknowledgement to the hardware capability change request from the cellular network until a stopping criterion expires.
In Example 16, the subject matter of Example 15 can optionally include that the stopping criterion comprises a reception of a predetermined number of Non-Acknowledgements to the reapplied forwarding of the hardware capability change request.
In Example 17, the subject matter of any one of Examples 15-16 can optionally include that the hardware circuit is configured to report the Non-Acknowledgement to the upper layer circuit responsive to the expiration of the stopping criterion.
Example 18 is a method for operating a cellular handset device comprising a hardware circuit, the method comprising: processing a radio signal by the hardware circuit according to a first hardware capability set when an operation mode of the hardware circuit is configured for a first operation mode; changing the operation mode of the hardware circuit between the first operation mode and a second operation mode responsive to a hardware capability change request; and processing a radio signal by the hardware circuit according to a second hardware capability set when the operation mode of the hardware circuit is configured for the second operation mode.
In Example 19, the subject matter of Example 18 can optionally include that the hardware circuit comprises a reception chain, wherein the reception chain comprises an antenna circuit, a hardware front-end circuit, at least one mixer and at least one local oscillator which are configured to support the first hardware capability set when the hardware circuit is configured for the first operation mode and which are configured to support the second hardware capability set when the hardware circuit is configured for the second operation mode.
In Example 20, the subject matter of Example 19 can optionally include: operating the hardware front-end circuit at a first frequency band when the hardware circuit is configured for the first operation mode; and operating the hardware front-end circuit at a second frequency band when the hardware circuit is configured for the second operation mode.
In Example 21, the subject matter of any one of Examples 19-20 can optionally include: operating the at least one local oscillator at a first clock frequency when the hardware circuit is configured for the first operation mode; and operating the at least one local oscillator at a second clock frequency when the hardware circuit is configured for the second operation mode.
In Example 22, the subject matter of any one of Examples 18-21 can optionally include: receiving a satellite signal, by the hardware front-end circuit, when the hardware circuit is configured for the first operation mode; and receiving a terrestrial beacon signal, by the hardware front-end circuit, when the hardware circuit is configured for the second operation mode.
In Example 23, the subject matter of Example 22 can optionally include: processing the satellite signal based on a global navigation satellite system functionality when the hardware circuit is configured for the first operation mode; and processing the terrestrial beacon signal based on a terrestrial beacon system functionality when the hardware circuit is configured for the second operation mode.
In Example 24, the subject matter of Example 23 can optionally include that the terrestrial beacon system functionality comprises an in-door call locating functionality.
In Example 25, the subject matter of any one of Examples 23-24 can optionally include that the terrestrial beacon system functionality comprises an emergency call locating functionality.
In Example 26, the subject matter of Example 25 can optionally include that the emergency call locating functionality comprises an e911 service functionality.
In Example 27, the subject matter of any one of Examples 18-26 can optionally include: storing the first hardware capability set in a hardware capability storage when the hardware circuit is configured for the second operation mode; and storing the second hardware capability set in the hardware capability storage when the hardware circuit is configured for the first operation mode.
In Example 28, the subject matter of Example 27 can optionally include: retrieving a content of the hardware capability storage responsive to the hardware capability change request.
In Example 29, the subject matter of any one of Examples 18-28 can optionally include: receiving the hardware capability change request from an upper layer circuit of the cellular handset device or from a cellular network.
In Example 30, the subject matter of Example 29 can optionally include: forwarding the hardware capability change request received from the upper layer circuit to the cellular network; and changing the operation mode of the hardware circuit responsive to an acknowledgement to the hardware capability change request from the cellular network.
In Example 31, the subject matter of any one of Examples 29-30 can optionally include: acknowledging a change of the operation mode of the hardware circuit to the upper layer circuit.
In Example 32, the subject matter of any one of Examples 30-31 can optionally include: reapplying the forwarding of the hardware capability change request to the cellular network upon receiving a Non-Acknowledgement to the hardware capability change request from the cellular network until a stopping criterion expires.
In Example 33, the subject matter of Example 32 can optionally include that the stopping criterion comprises a reception of a predetermined number of Non-Acknowledgements to the reapplied forwarding of the hardware capability change request.
In Example 34, the subject matter of any one of Examples 32-33 can optionally include: reporting the Non-Acknowledgement to the upper layer circuit responsive to the expiration of the stopping criterion.
Example 35 is a cellular handset device, comprising: a hardware circuit configured to process a radio signal based on a global navigation satellite system hardware capability set when configured for a first operation mode and to process a radio signal based on a terrestrial beacon system hardware capability set when configured for a second operation mode; and a hardware manager configured to change an operation mode of the hardware circuit between the first operation mode and the second operation mode responsive to a hardware capability change request.
In Example 36, the subject matter of Example 35 can optionally include that the hardware circuit comprises a reception chain, wherein the reception chain comprises an antenna circuit, a hardware front-end circuit, at least one mixer and at least one local oscillator which are configured to support the GNSS hardware capability set when the hardware circuit is configured for the first operation mode and which are configured to support the terrestrial beacon system hardware capability set when the hardware circuit is configured for the second operation mode.
In Example 37, the subject matter of Example 36 can optionally include that the hardware front-end circuit is configured to operate at a first frequency band when the hardware circuit is configured for the first operation mode and to operate at a second frequency band when the hardware circuit is configured for the second operation mode.
In Example 38, the subject matter of any one of Examples 36-37 can optionally include that the at least one local oscillator is configured to operate at a first clock frequency when the hardware circuit is configured for the first operation mode and to operate at a second clock frequency when the hardware circuit is configured for the second operation mode.
Example 39 is a method for configuring a hardware circuit of a cellular handset device, the method comprising: receiving a hardware capability change request from an upper layer circuit of the cellular handset device; forwarding the hardware capability change request to a cellular network; and changing the operation mode of the hardware circuit between a first operation mode and a second operation mode responsive to an acknowledgement from the cellular network, wherein the hardware circuit is configured to process a radio signal according to a first hardware capability set when the operation mode of the hardware circuit is configured for the first operation mode, and wherein the hardware circuit is configured to process a radio signal according to a second hardware capability set when the operation mode of the hardware circuit is configured for the second operation mode.
In Example 40, the subject matter of Example 39 can optionally include: reapplying the forwarding of the hardware capability change request to the cellular network responsive to a Non-Acknowledgement from the cellular network.
In Example 41, the subject matter of Example 40 can optionally include: reapplying the forwarding of the hardware capability change request to the cellular network until a stopping criterion expires.
In Example 42, the subject matter of Example 41 can optionally include that the stopping criterion comprises a reception of a predetermined number of Non-Acknowledgements to the reapplied forwarding of the hardware capability change request.
In Example 43, the subject matter of any one of Examples 40-42 can optionally include: reporting the Non-Acknowledgement to the upper layer circuit responsive to the expiration of the stopping criterion.
Example 44 is a device for configuring a hardware circuit of a cellular handset device, the device comprising: means for receiving a hardware capability change request from an upper layer circuit of the cellular handset device; means for forwarding the hardware capability change request to a cellular network; and means for changing the operation mode of the hardware circuit between a first operation mode and a second operation mode responsive to an acknowledgement from the cellular network, wherein the hardware circuit is configured to process a radio signal according to a first hardware capability set when the operation mode of the hardware circuit is configured for the first operation mode, and wherein the hardware circuit is configured to process a radio signal according to a second hardware capability set when the operation mode of the hardware circuit is configured for the second operation mode.
In Example 45, the subject matter of Example 44 can optionally include: means for reapplying the forwarding of the hardware capability change request to the cellular network responsive to a Non-Acknowledgement from the cellular network.
Example 46 is a cellular communication system, comprising: a hardware circuit configured to process a radio signal according to a first hardware capability set when configured for a first operation mode and to process the radio signal according to a second hardware capability set when configured for a second operation mode; and a hardware manager configured to change an operation mode of the hardware circuit between the first operation mode and the second operation mode responsive to a hardware capability change request.
In Example 47, the subject matter of Example 46 can optionally include: a cellular network configured to approve the hardware capability change request, wherein the hardware manager is configured to change the operation mode of the hardware circuit responsive to an approval of the hardware capability change request from the cellular network.
In Example 48, the subject matter of any one of Examples 46-47 can optionally include that the hardware circuit comprises a reception chain, wherein the reception chain comprises an antenna circuit, a hardware front-end circuit, at least one mixer and at least one local oscillator which are configured to support the first hardware capability set when the hardware circuit is configured for the first operation mode and which are configured to support the second hardware capability set when the hardware circuit is configured for the second operation mode.
Example 49 is a computer readable non-transitory medium on which computer instructions are stored which when executed by a computer cause the computer to perform the method of any one of Examples 18 to 34 or 39 to 43.

In addition, while a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it is understood that aspects of the disclosure may be implemented in discrete circuits, partially integrated circuits or fully integrated circuits or programming means. Also, the terms "exemplary", "for example" and "e.g." are merely meant as an example, rather than the best or optimal.

Although specific aspects have been illustrated and described herein, it will be appreciated by those of ordinary skill in the art that a variety of alternate and/or equivalent implementations may be substituted for the specific aspects shown and described without departing from the scope of the present disclosure. The scope of the invention is defined in the appended claims.

## Claims

1. A cellular handset device, comprising:
a configurable hardware circuit (202) configured to process a received satellite signal (210) according to a first hardware capability set (211) when configured for a first operation mode and to process a received terrestrial beacon signal (220) according to a second hardware capability set (212) when configured for a second operation mode; and
a hardware manager (320) configured to change an operation mode of the configurable hardware circuit (202) between the first operation mode and the second operation mode responsive to a hardware capability change request (322),
wherein the hardware capability change request (322) is initiated from a cellular network or initiated by a higher application layer of the cellular handset device, and
wherein the hardware circuit (202) comprises a reception chain, wherein the reception chain comprises an antenna circuit (311), a hardware front-end circuit (313), at least one mixer (315) and at least one local oscillator (317) which are configured to support the first hardware capability set (211) when the hardware circuit (202) is configured for the first operation mode and which are configured to support the second hardware capability set (212) when the hardware circuit (202) is configured for the second operation mode.

2. The cellular handset device of claim 1,
wherein the hardware front-end circuit (313) is configured to operate at a first frequency band when the hardware circuit (202) is configured for the first operation mode and to operate at a second frequency band when the hardware circuit (202) is configured for the second operation mode.

3. The cellular handset device of claim 1 or 2,
wherein the at least one local oscillator (317) is configured to operate at a first clock frequency when the hardware circuit (202) is configured for the first operation mode and to operate at a second clock frequency when the hardware circuit (202) is configured for the second operation mode.

4. The cellular handset device of one of the preceding claims,
wherein the hardware front-end circuit (313) is configured to receive the satellite signal (210) when the hardware circuit (202) is configured for the first operation mode and to receive the terrestrial beacon signal (220) when the hardware circuit (202) is configured for the second operation mode.

5. The cellular handset device of claim 4,
wherein the hardware circuit (202) comprises a navigation circuit configured to process the satellite signal (210) based on a global navigation satellite system functionality when the hardware circuit (202) is configured for the first operation mode and to process the terrestrial beacon signal (220) based on a terrestrial beacon system functionality when the hardware circuit (202) is configured for the second operation mode.

6. The cellular handset device of claim 5,
wherein the terrestrial beacon system functionality comprises an in-door call locating functionality.

7. The cellular handset device of claim 5 or 6,
wherein the terrestrial beacon system functionality comprises an emergency call locating functionality.

8. The cellular handset device of claim 7,
wherein the emergency call locating functionality comprises an e911 service functionality.

9. The cellular handset device of one of the preceding claims, comprising:
a hardware capability storage configured to store the first hardware capability set (211) when the hardware circuit (202) is configured for the second operation mode and to store the second hardware capability set (212) when the hardware circuit (202) is configured for the first operation mode.

10. The cellular handset device of claim 9,
wherein the hardware manager (320) is configured to retrieve a content of the hardware capability storage responsive to the hardware capability change request (322).

11. The cellular handset device of one of the preceding claims,
wherein the hardware manager (320) is configured to receive the hardware capability change request (322) from an upper layer circuit of the cellular handset device or from a cellular network.

12. A method for operating a cellular handset device comprising a configurable hardware circuit (202), the method comprising:
processing a received satellite signal (210) by the configurable hardware circuit (202) according to a first hardware capability set (211) when an operation mode of the configurable hardware circuit (202) is configured for a first operation mode;
changing the operation mode of the configurable hardware circuit (202) between the first operation mode and a second operation mode responsive to a hardware capability change request (322), wherein the hardware capability change request (322) is initiated from a cellular network or initiated by a higher application layer of the cellular handset device; and
processing a received terrestrial beacon signal (220) by the configurable hardware circuit (202) according to a second hardware capability set (212) when the operation mode of the configurable hardware circuit (202) is configured for the second operation mode,
wherein the hardware circuit (202) comprises a reception chain, wherein the reception chain comprises an antenna circuit (311), a hardware front-end circuit (313), at least one mixer (315) and at least one local oscillator (317) which are configured to support the first hardware capability set (211) when the hardware circuit (202) is configured for the first operation mode and which are configured to support the second hardware capability set (212) when the hardware circuit (202) is configured for the second operation mode.

13. A computer readable non-transitory medium on which computer instructions are stored which when executed by a computer cause the computer to perform the method of claim 12.

## Patentansprüche

1. Zellulare Handgerätvorrichtung, die Folgendes umfasst:
eine konfigurierbare Hardware-Schaltung (202), die konfiguriert ist, ein empfangenes Satellitensignal (210) gemäß einer ersten Hardware-Fähigkeitsgruppe (211) zu verarbeiten, wenn sie für eine erste Betriebsart konfiguriert ist, und ein empfangenes terrestrisches Baken-Signal (220) gemäß einer zweiten Hardware-Fähigkeitsgruppe (212) zu verarbeiten, wenn sie für eine zweite Betriebsart konfiguriert ist; und
einen Hardware-Manager (320), der konfiguriert ist, eine Betriebsart der konfigurierbaren Hardware-Schaltung (202) zwischen der ersten Betriebsart und der zweiten Betriebsart als Reaktion auf eine Hardware-Fähigkeitsänderungsanforderung (322) zu wechseln,
wobei die Hardware-Fähigkeitsänderungsanforderung (322) von einem zellularen Netz ausgelöst wird oder durch eine höhere Anwendungsschicht der zellularen Handgerätvorrichtung ausgelöst wird und
wobei die Hardware-Schaltung (202) eine Empfangskette umfasst, wobei die Empfangskette eine Antennenschaltung (311), eine Hardware-Frontend-Schaltung (313), mindestens einen Mischer (315) und mindestens einen Lokaloszillator (317) umfasst, die konfiguriert sind, die erste Hardware-Fähigkeitsgruppe (211) zu unterstützen, wenn die Hardware-Schaltung (202) für die erste Betriebsart konfiguriert ist, und die konfiguriert sind, die zweite Hardware-Fähigkeitsgruppe (212) zu unterstützen, wenn die Hardware-Schaltung (202) für die zweite Betriebsart konfiguriert ist.

2. Zellulare Handgerätvorrichtung nach Anspruch 1,
wobei die Hardware-Frontend-Schaltung (313) konfiguriert ist, in einem ersten Frequenzband zu arbeiten, wenn die Hardware-Schaltung (202) für die erste Betriebsart konfiguriert ist, und in einem zweiten Frequenzband zu arbeiten, wenn die Hardware-Schaltung (202) für die zweite Betriebsart konfiguriert ist.

3. Zellulare Handgerätvorrichtung nach Anspruch 1 oder 2,
wobei der mindestens eine Lokaloszillator (317) konfiguriert ist, bei einer ersten Taktfrequenz zu arbeiten, wenn die Hardware-Schaltung (202) für die erste Betriebsart konfiguriert ist, und bei einer zweiten Taktfrequenz zu arbeiten, wenn die Hardware-Schaltung (202) für die zweite Betriebsart konfiguriert ist.

4. Zellulare Handgerätvorrichtung nach einem der vorhergehenden Ansprüche,
wobei die Hardware-Frontend-Schaltung (313) konfiguriert ist, das Satellitensignal (210) zu empfangen, wenn die Hardware-Schaltung (202) für die erste Betriebsart konfiguriert ist, und das terrestrische Baken-Signal (220) zu empfangen, wenn die Hardware-Schaltung (202) für die zweite Betriebsart konfiguriert ist.

5. Zellulare Handgerätvorrichtung nach Anspruch 4,
wobei die Hardware-Schaltung (202) eine Navigationsschaltung umfasst, die konfiguriert ist, das Satellitensignal (210) anhand einer Funktionalität eines globalen Navigationssatellitensystems zu verarbeiten, wenn die Hardware-Schaltung (202) für die erste Betriebsart konfiguriert ist, und das terrestrische Baken-Signal (220) anhand einer Funktionalität eines terrestrischen Baken-Systems zu verarbeiten, wenn die Hardware-Schaltung (202) für die zweite Betriebsart konfiguriert ist.

6. Zellulare Handgerätvorrichtung nach Anspruch 5,
wobei die Funktionalität des terrestrischen Baken-Systems eine Anrufslokalisierungsfunktionalität im Haus umfasst.

7. Zellulare Handgerätvorrichtung nach Anspruch 5 oder 6,
wobei die Funktionalität des terrestrischen Baken-Systems eine Notruflokalisierungsfunktionalität umfasst.

8. Zellulare Handgerätvorrichtung nach Anspruch 7,
wobei die Notruflokalisierungsfunktionalität eine e911-Dienstfunktionalität umfasst.

9. Zellulare Handgerätvorrichtung nach einem der vorhergehenden Ansprüche, die Folgendes umfasst:
einen Hardwarefähigkeitsspeicher, der konfiguriert ist, die erste Hardware-Fähigkeitsgruppe (211) zu speichern, wenn die Hardware-Schaltung (202) für die zweite Betriebsart konfiguriert ist, und die zweite Hardware-Fähigkeitsgruppe (212) zu speichern, wenn die Hardware-Schaltung (202) für die erste Betriebsart konfiguriert ist.

10. Zellulare Handgerätvorrichtung nach Anspruch 9,
wobei der Hardware-Manager (320) konfiguriert ist, einen Inhalt des Hardware-Fähigkeitsspeichers als Reaktion auf die Hardware-Fähigkeitsänderungsanforderung (322) zu erfassen.

11. Zellulare Handgerätvorrichtung nach einem der vorhergehenden Ansprüche,
wobei der Hardware-Manager (320) konfiguriert ist, die Hardware-Fähigkeitsänderungsanforderung (322) von einer Schaltung einer oberen Schicht der zellularen Handgerätvorrichtung oder von einem zellularen Netz zu empfangen.

12. Verfahren zum Betreiben einer zellularen Handgerätvorrichtung, die eine konfigurierbare Hardware-Schaltung (202) umfasst, wobei das Verfahren Folgendes umfasst:
Verarbeiten eines empfangenen Satellitensignals (210) durch die konfigurierbare Hardware-Schaltung (202) gemäß einer ersten Hardware-Fähigkeitsgruppe (211), wenn eine Betriebsart der konfigurierbaren Hardware-Schaltung (202) für eine erste Betriebsart konfiguriert ist;
Ändern der Betriebsart der konfigurierbaren Hardware-Schaltung (202) zwischen der ersten Betriebsart und einer zweiten Betriebsart als Reaktion auf eine Hardware-Fähigkeitsänderungsanforderung (322), wobei die Hardware-Fähigkeitsänderungsanforderung (322) von einem zellularen Netz ausgelöst wird oder durch eine höhere Anwendungsschicht der zellularen Handgerätvorrichtung ausgelöst wird; und
Verarbeiten eines empfangenen terrestrischen Baken-Signals (220) durch die konfigurierbare Hardware-Schaltung (202) gemäß einer zweiten Hardware-Fähigkeitsgruppe (212), wenn die Betriebsart der konfigurierbaren Hardware-Schaltung (202) für die zweite Betriebsart konfiguriert ist,
wobei die Hardware-Schaltung (202) eine Empfangskette umfasst, wobei die Empfangskette eine Antennenschaltung (311), eine Hardware-Frontend-Schaltung (313), mindestens einen Mischer (315) und mindestens einen Lokaloszillator (317) umfasst, die konfiguriert sind, die erste Hardware-Fähigkeitsgruppe (211) zu unterstützen, wenn die Hardware-Schaltung (202) für die erste Betriebsart konfiguriert ist, und die konfiguriert sind, die zweite Hardware-Fähigkeitsgruppe (212) zu unterstützen, wenn die Hardware-Schaltung (202) für die zweite Betriebsart konfiguriert ist.

13. Computerlesbares nicht transitorisches Medium, auf dem Computeranweisungen gespeichert sind, die dann, wenn sie durch einen Computer ausgeführt werden, bewirken, dass der Computer das Verfahren nach Anspruch 12, ausführt.

## Revendications

1. Dispositif de combiné cellulaire, comprenant :
un circuit matériel configurable (202) configuré pour traiter un signal satellite reçu (210) en fonction d'un premier ensemble de capacités matérielles (211) lorsqu'il est configuré pour un premier mode de fonctionnement, et pour traiter un signal de balise terrestre reçu (220) en fonction d'un second ensemble de capacités matérielles (212) lorsqu'il est configuré pour un second mode de fonctionnement ; et
un gestionnaire de matériel (320) configuré pour changer un mode de fonctionnement du circuit matériel configurable (202) entre le premier mode de fonctionnement et le second mode de fonctionnement en réponse à une requête de changement de capacités matérielles (322),
dans lequel la requête de changement de capacités matérielles (322) est initiée à partir d'un réseau cellulaire ou initiée par une couche d'application supérieure du dispositif de combiné cellulaire, et
dans lequel le circuit matériel (202) comprend une chaîne de réception, dans lequel la chaîne de réception comprend un circuit d'antenne (311), un circuit frontal matériel (313), au moins un mélangeur (315) et au moins un oscillateur local (317) qui sont configurés pour prendre en charge le premier ensemble de capacités matérielles (211) lorsque le circuit matériel (202) est configuré pour le premier mode de fonctionnement, et qui sont configurés pour prendre en charge le second ensemble de capacités matérielles (212) lorsque le circuit matériel (202) est configuré pour le second mode de fonctionnement.

2. Dispositif de combiné cellulaire selon la revendication 1,
dans lequel le circuit frontal matériel (313) est configuré pour fonctionner au niveau d'une première bande de fréquences lorsque le circuit matériel (202) est configuré pour le premier mode de fonctionnement, et pour fonctionner au niveau d'une seconde bande de fréquences lorsque le circuit matériel (202) est configuré pour le second mode de fonctionnement.

3. Dispositif de combiné cellulaire selon la revendication 1 ou 2,
dans lequel le ou les oscillateurs locaux (317) sont configurés pour fonctionner au niveau d'une première fréquence d'horloge lorsque le circuit matériel (202) est configuré pour le premier mode de fonctionnement, et pour fonctionner au niveau d'une seconde fréquence d'horloge lorsque le circuit matériel (202) est configuré pour le second mode de fonctionnement.

4. Dispositif de combiné cellulaire selon l'une des revendications précédentes,
dans lequel le circuit frontal matériel (313) est configuré pour recevoir le signal satellite (210) lorsque le circuit matériel (202) est configuré pour le premier mode de fonctionnement, et pour recevoir le signal de balise terrestre (220) lorsque le circuit matériel (202) est configuré pour le second mode de fonctionnement.

5. Dispositif de combiné cellulaire selon la revendication 4,
dans lequel le circuit matériel (202) comprend un circuit de navigation configuré pour traiter le signal satellite (210) sur la base d'une fonctionnalité d'un système mondial de navigation par satellite lorsque le circuit matériel (202) est configuré pour le premier mode de fonctionnement, et pour traiter le signal de balise terrestre (220) sur la base d'une fonctionnalité d'un système de balise terrestre lorsque le circuit matériel (202) est configuré pour le second mode de fonctionnement.

6. Dispositif de combiné cellulaire selon la revendication 5,
dans lequel la fonctionnalité du système de balise terrestre comprend une fonctionnalité de localisation d'appels entrants.

7. Dispositif de combiné cellulaire selon la revendication 5 ou 6,
dans lequel la fonctionnalité du système de balise terrestre comprend une fonctionnalité de localisation d'appels d'urgence.

8. Dispositif de combiné cellulaire selon la revendication 7,
dans lequel la fonctionnalité de localisation d'appels d'urgence comprend une fonctionnalité de service e911.

9. Dispositif de combiné cellulaire selon l'une des revendications précédentes, comprenant :
un stockage de capacités matérielles configuré pour stocker le premier ensemble de capacités matérielles (211) lorsque le circuit matériel (202) est configuré pour le second mode de fonctionnement, et pour stocker le second ensemble de capacités matérielles (212) lorsque le circuit matériel (202) est configuré pour le premier mode de fonctionnement.

10. Dispositif de combiné cellulaire selon la revendication 9,
dans lequel le gestionnaire matériel (320) est configuré pour récupérer un contenu du stockage de capacités matérielles en réponse à la requête de changement de capacités matérielles (322).

11. Dispositif de combiné cellulaire selon l'une des revendications précédentes,
dans lequel le gestionnaire matériel (320) est configuré pour recevoir la requête de changement de capacités matérielles (322) provenant d'un circuit de couche supérieure du dispositif de combiné cellulaire ou provenant d'un réseau cellulaire.

12. Procédé de fonctionnement d'un dispositif de combiné cellulaire comprenant un circuit matériel configurable (202), le procédé comprenant :
le traitement d'un signal satellite reçu (210) par le circuit matériel configurable (202) en fonction d'un premier ensemble de capacités matérielles (211) lorsqu'un mode de fonctionnement du circuit matériel configurable (202) est configuré pour un premier mode de fonctionnement ;
la modification du mode de fonctionnement du circuit matériel configurable (202) entre le premier mode de fonctionnement et un second mode de fonctionnement en réponse à une requête de changement de capacités matérielles (322), dans lequel la requête de changement de capacités matérielles (322) est initiée à partir d'un réseau cellulaire ou initiée par une couche d'application supérieure du dispositif de combiné cellulaire ; et
le traitement d'un signal de balise terrestre reçu (220) par le circuit matériel configurable (202) en fonction d'un second ensemble de capacités matérielles (212) lorsque le mode de fonctionnement du circuit matériel configurable (202) est configuré pour le second mode de fonctionnement,
dans lequel le circuit matériel (202) comprend une chaîne de réception, dans lequel la chaîne de réception comprend un circuit d'antenne (311), un circuit frontal matériel (313), au moins un mélangeur (315) et au moins un oscillateur local (317) qui sont configurés pour prendre en charge le premier ensemble de capacités matérielles (211) lorsque le circuit matériel (202) est configuré pour le premier mode de fonctionnement, et qui sont configurés pour prendre en charge le second ensemble de capacités matérielles (212) lorsque le circuit matériel (202) est configuré pour le second mode de fonctionnement.

13. Support non transitoire lisible par ordinateur sur lequel des instructions informatiques sont stockées qui, lorsqu'elles sont exécutées par un ordinateur, amènent l'ordinateur à mettre en œuvre le procédé selon la revendication 12.
